(19) Europäisches Patentamt / European Patent Office / Office européen des brevets

(11) **EP 4 772 490 A1**

(12) **EUROPEAN PATENT APPLICATION**
published in accordance with Art. 153(4) EPC

(43) Date of publication:
08.07.2026 Bulletin 2026/28

(21) Application number: 24859354.3

(22) Date of filing: 05.08.2024

(51) International Patent Classification (IPC):
$C04B\ 35/488^{(2006.01)}$   $A44C\ 27/00^{(2006.01)}$
$C01G\ 25/02^{(2006.01)}$

(52) Cooperative Patent Classification (CPC):
A44C 27/00; C01G 25/02; C04B 35/488

(86) International application number:
PCT/JP2024/027917

(87) International publication number:
WO 2025/047312 (06.03.2025 Gazette 2025/10)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 29.08.2023 JP 2023138864

(71) Applicant: Tosoh Corporation
Yamaguchi 746-8501 (JP)

(72) Inventors:
• HIGUCHI Yuya
  Shunan-shi Yamaguchi 746-8501 (JP)
• TSUCHIYA Satoshi
  Shunan-shi Yamaguchi 746-8501 (JP)
• NAGAYAMA Hitoshi
  Shunan-shi Yamaguchi 746-8501 (JP)

(74) Representative: Müller-Boré & Partner
Patentanwälte PartG mbB
Friedenheimer Brücke 21
80639 München (DE)

(54) **RED SINTERED BODY AND METHOD FOR PRODUCING SAME**

(57) Provided is at least one of a sintered body of zirconia and a method for producing the same; the sintered body exhibits a red color mainly in reflected light, with the red color being based on the coloring of trivalent cerium, and the sintered body exhibits a bright red color under daylight. A sintered body of zirconia, the sintered body containing cerium, aluminum, yttrium and a toning element, wherein a content of the cerium, calculated as $CeO_2$, is 1.5 mol% or greater and 6.0 mol% or less, a content of the aluminum, calculated as $Al_2O_3$, is 0.05 mol% or greater and 4.0 mol% or less, a content of the yttrium, calculated as $Y_2O_3$, is 2.0 mol% or greater and 6.0 mol% or less, a content of the toning additive element, calculated as an oxide, is greater than 0 mol% and 4.0 mol% or less, the cerium includes trivalent cerium ($Ce^{3+}$), the toning element is at least one of alkaline earth metal elements and rare earth elements other than yttrium or cerium, and a ratio of an ionic radius of the toning element to an ionic radius of tetravalent zirconium ($Zr^{4+}$) is greater than 1.00 and 1.60 or less.

EP 4 772 490 A1

**Description**

TECHNICAL FIELD

The present disclosure relates to a sintered body and a method for producing the sintered body. The sintered body includes zirconia as a major component and exhibits a red color.

BACKGROUND ART

There is a need for a zirconia sintered body containing a coloring agent, which is a so-called colored zirconia sintered body, for use in decorative components and exterior parts of electronic device materials. In particular, attention is being focused on zirconia sintered bodies containing cerium oxide ($CeO_2$) as the coloring agent.

For example, there is a report regarding a zirconia sintered body that exhibits a red color; this zirconia sintered body is made of a tetragonal zirconia and is one that contains 0.5 mol% or greater $CeO_2$ as a coloring agent and which is obtained by reducing the cerium (Patent Document 1). Furthermore, there is a report regarding a light-transmissive zirconia sintered body made of a cubic phase; this sintered body contains reduced ceria ($Ce_2O_3$) resulting from the reduction of cerium oxide (Patent Document 2). The zirconia sintered body according to Patent Document 2 has a strong red tone compared to zirconia sintered bodies that have so far been reported to exhibit a red color. Furthermore, Patent Document 3 reports that in a case where cerium oxide and neodymium oxide, as coloring agents, are included in a zirconia sintered body, and a reduction treatment is performed thereon, a difference between a reflectance for light having a wavelength of 590 nm and a reflectance for light having a wavelength of 630 nm increases.

Patent Document 4 reports that in a case where a red zirconia sintered body containing cerium oxide as a coloring agent contains a coexisting aluminum compound, the zirconia sintered body exhibits a uniform color, without exhibiting changes in tone due to a thickness of the sintered body.

PRIOR ART DOCUMENTS

PATENT DOCUMENTS

Patent Document 1: JP-A-62-83366
Patent Document 2: JP-A-2011-207745
Patent Document 3: JP-A-2017-132647
Patent Document 4: JP-A-2017-75086

DISCLOSURE OF INVENTION

TECHNICAL PROBLEM

The zirconia sintered body of Patent Document 2 has very high light transmissivity and exhibits a color in transmitted light. Color exhibited in transmitted light has a transparent tone, such as that of colored glass, and the tone significantly varies with the thickness of the sintered body. Accordingly, in cases where this zirconia sintered body is used as a small component or a thin component, the color exhibited is very weak.

In contrast, the sintered bodies of Patent Documents 1 and 3 exhibit color mainly in reflected light from surfaces of the sintered bodies, and, therefore, the color exhibited is stable irrespective of the size of the component. The zirconia sintered bodies containing cerium oxide that are reported in Patent Document 1 all have a reddish tone. However, these tones include a neutral color between orange and red, a neutral color between brown and red, or a neutral color between black and red; that is, the tones are not purely red. The zirconia sintered body disclosed in Patent Document 3, which includes cerium oxide and neodymium oxide, is a sintered body having a strong red color due to the inclusion of neodymium oxide, but the tone still includes a neutral color between orange and red.

The tone of the zirconia sintered body of Patent Document 4 includes a neutral color between orange and red and, therefore, does not provide aesthetics of a pure red color.

In view of these problems, an object of the present disclosure is to provide at least one of a sintered body of zirconia and a method for producing the same; the sintered body exhibits a red color mainly in reflected light, with the red color being based on the coloring of trivalent cerium, and the sintered body exhibits a bright red color under daylight.

SOLUTION TO PROBLEM

The present inventors conducted studies on zirconia sintered bodies that contain trivalent cerium as a coloring agent and exhibit a red color in reflected light. As a result, it was discovered that in a case where a zirconia sintered body containing trivalent cerium as a coloring agent includes aluminum and a specific toning element, the sintered body of zirconia exhibits a bright red color under daylight.

Specifically, the present invention is as described in the claims, and a summary of the present disclosure is as follows.

[1] A sintered body of zirconia, the sintered body containing cerium, aluminum, yttrium and a toning element, wherein

a content of the cerium, calculated as $CeO_2$, is 1.5 mol% or greater and 6.0 mol% or less,
a content of the aluminum, calculated as $Al_2O_3$, is 0.05 mol% or greater and 4.0 mol% or less,
a content of the yttrium, calculated as $Y_2O_3$, is 2.0 mol% or greater and 6.0 mol% or less,
a content of the toning element, calculated as an oxide, is greater than 0 mol% and 4.0 mol% or less,
the cerium includes trivalent cerium ($Ce^{3+}$),
the toning element is at least one of alkaline earth metal elements and rare earth elements other than yttrium or cerium, and
a ratio of an ionic radius of the toning element to an ionic radius of tetravalent zirconium ($Zr^{4+}$) is greater than 1.00 and 1.60 or less.

[2] The sintered body according to [1], wherein the zirconia has a crystal structure including a tetragonal phase and a cubic phase.

[3] The sintered body according to [1] or [2], wherein the toning element is one or more selected from the group of calcium, magnesium, erbium, holmium, dysprosium, terbium, gadolinium, europium, samarium, neodymium, praseodymium and lanthanum.

[4] The sintered body according to any one of [1] to [3], wherein the ratio of the ionic radius of the toning element is greater than 1.33 and 1.40 or less.

[5] The sintered body according to any one of [1] to [4], wherein a ratio a*/b*, which is a ratio of a color parameter a* to a color parameter b* according to an L*a*b* color system, is greater than or equal to 2.0.

[6] The sintered body according to any one of [1] to [5], wherein a ratio $R_{700}/R_{600}$, which is a ratio of $R_{700}$ to $R_{600}$, is greater than or equal to 2.4, where $R_{700}$ is a reflectance for light at a wavelength of 700 nm, and $R_{600}$ is a reflectance for light at a wavelength of 600 nm.

[7] The sintered body according to any one of [1] to [6], wherein the sintered body has an XRD pattern in which a ratio of a height of a peak top at $2\theta = 37.0 \pm 0.3$ to a height of a peak top at $2\theta = 30.0 \pm 0.3$ is 0.005 or less.

[8] A powder composite containing a cerium source, an aluminum source, an yttrium-containing-zirconia source and a toning element source, wherein

a content of cerium, calculated as $CeO_2$, is 1.5 mol% or greater and 6.0 mol% or less,
a content of aluminum, calculated as $Al_2O_3$, is 0.05 mol% or greater and 4.0 mol% or less,
a content of yttrium, calculated as $Y_2O_3$, is 2.0 mol% or greater and 6.0 mol% or less,
a content of a toning element, calculated as an oxide, is greater than 0 mol% and 4.0 mol% or less,
the toning element source is a compound containing at least one of alkaline earth metal elements and rare earth elements other than yttrium or cerium, and
a ratio of an ionic radius of the toning element to an ionic radius of tetravalent zirconium ($Zr^{4+}$) is greater than 1.0 and 1.6 or less.

[9] A method for producing the sintered body according to any one of [1] to [7], the method comprising a molding step of molding the powder composite according to [8] to form a green body; a step of subjecting the green body to pressureless sintering to form a primary sintered body; and a secondary sintering step of sintering the primary sintered body in a reducing atmosphere.

ADVANTAGEOUS EFFECTS OF INVENTION

The present disclosure can provide at least one of a sintered body of zirconia and a method for producing the same; the sintered body of zirconia exhibits a red color mainly in reflected light, with the red color being based on the coloring of trivalent cerium, and the sintered body exhibits a bright red color under daylight.

DESCRIPTION OF EMBODIMENTS

A sintered body of the present disclosure will be described below with reference to an example of an embodiment. In the present embodiment, terms are defined as follows.

A "composite" is a substance having a specific composition, and examples of composites include one or more selected from the group of powders, granules, green bodies, calcined bodies and sintered bodies. A "zirconia composite" is a composite consisting essentially of zirconia or a composite containing zirconia as a matrix (base material).

A "powder" is an assembly of powder particles and is a composite having flowability. A "zirconia powder" is a powder consisting essentially of zirconia or a powder containing zirconia as a matrix (base material). A "powder composite" is a composite formed of powders having different respective features and, in particular, is a composite including powders having different respective compositions.

A "green body" is a composite having a specific shape and made of powder particles aggregated by a physical force; in particular, the green body is a composite that has not been heat-treated after the shape was given (e.g., after molding). A "zirconia green body" is a green body consisting essentially of zirconia or a green body containing zirconia as a matrix (base material).

A "sintered body" is a composite having a specific shape and made of crystalline particles; the sintered body is a composite that has been heat-treated at a temperature greater than or equal to a sintering temperature. A "zirconia sintered body" is a sintered body consisting essentially of zirconia or a sintered body containing zirconia as a matrix (base material).

A "stabilizing element" is an element that serves to stabilize a crystalline phase of zirconia by dissolving into the zirconia.

A "BET specific surface area" can be measured in accordance with JIS R 1626, with a multi-point BET method (five points) that uses nitrogen as the adsorption gas. Specific conditions for the measurement of the BET specific surface area are, for example, the following conditions.

Adsorption medium: $N_2$
Adsorption temperature: -196°C
Pretreatment conditions: degassing at 250°C in an air atmosphere for 1 hour or more
The BET specific surface area can be measured with a common device (e.g., TriStar II 3202, manufactured by Shimadzu Corporation).

An "average particle size" is a particle size corresponding to D50 (median size) of a volume particle size distribution that can be obtained by laser diffraction/scattering, with a common particle size distribution analyzer (e.g., instrument name: MT-3100II, manufactured by MicrotracBEL Corp.). Specific conditions for the measurement may be the following conditions.

Measurement range: 0.01 to 2000 $\mu$m
Refractive index of particles: 2.17
Particle transmittance: transmissive
Particle shape: non-spherical
Refractive index of solvent: 1.333

"Pressureless sintering" is a method for sintering involving heating a sintering object (e.g., a green body or calcined body) without applying an external force thereto during sintering.

[Sintered Body]

The present embodiment relates to a sintered body of zirconia containing cerium, aluminum, yttrium and a toning element, wherein

a content of the cerium, calculated as $CeO_2$, is 1.5 mol% or greater and 6.0 mol% or less,
a content of the aluminum, calculated as $Al_2O_3$, is 0.05 mol% or greater and 4.0 mol% or less,
a content of the yttrium, calculated as $Y_2O_3$, is 2.0 mol% or greater and 6.0 mol% or less,
a content of the toning element, calculated as an oxide, is greater than 0 mol% and 4.0 mol% or less,
the cerium includes trivalent cerium ($Ce^{3+}$),
the toning element is at least one of alkaline earth metal elements and rare earth elements other than yttrium or cerium, and

a ratio of an ionic radius of the toning element to an ionic radius of tetravalent zirconium ($Zr^{4+}$) is greater than 1.00 and 1.60 or less.

With this configuration, the zirconia sintered body is a so-called red zirconia sintered body, which exhibits a red color due to the coloring of trivalent cerium and exhibits a bright red color under daylight.

The sintered body of the present embodiment contains cerium, aluminum, yttrium and a toning element. Preferably, the cerium, the yttrium, and the toning element are dissolved in the zirconia, in the sintered body of the present embodiment. Preferably, the aluminum is present as alumina particles.

In the sintered body of the present embodiment, the content of the yttrium calculated as $Y_2O_3$ (hereinafter also simply referred to as an "yttrium content") is 2.0 mol% or greater and 6.0 mol% or less. If the yttrium content is less than 2.0 mol%, defects are likely to occur during production; that is, consistent production of the sintered body cannot be achieved. On the other hand, if the yttrium content is greater than 6.0 mol%, strength decreases.

The yttrium content of the sintered body of the present embodiment may be any content that is 2.0 mol% or greater, 2.2 mol% or greater, 2.4 mol% or greater or 2.5 mol% or greater and 6.0 mol% or less, 5.5 mol% or less, 5.0 mol% or less, 4.5 mol% or less or 4.0 mol% or less. Preferably, the yttrium content is, for example, 2.0 mol% or greater and 6.0 mol% or less, 2.2 mol% or greater and 5.5 mol% or less, 2.4 mol% or greater and 5.0 mol% or less, 2.4 mol% or greater and 4.5 mol% or less or 2.5 mol% or greater and 4.0 mol% or less.

In the sintered body of the present embodiment, the content of the cerium calculated as $CeO_2$ (hereinafter also simply referred to as a "cerium content") is 1.5 mol% or greater and 6.0 mol% or less. If the cerium content is less than 1.5 mol%, the reddish color cannot be obtained. On the other hand, if the cerium content is greater than 6.0 mol%, the sintered body takes on a black color; that is, the resulting sintered body does not have a bright red color. The cerium content may be any content that is 1.5 mol% or greater, 1.8 mol% or greater, 2.0 mol% or greater or 2.2 mol% or greater and 6.0 mol% or less, 5.5 mol% or less, 5.0 mol% or less, 4.5 mol% or less or 4.0 mol% or less. Preferably, the cerium content is, for example, 1.5 mol% or greater and 6.0 mol% or less, 1.8 mol% or greater and 5.5 mol% or less, 2.0 mol% or greater and 5.0 mol% or less, 2.0 mol% or greater and 4.5 mol% or less, 2.0 mol% or greater and 4.0 mol% or less or 2.2 mol% or greater and 4.0 mol% or less.

The cerium present in the sintered body of the present embodiment includes at least trivalent cerium ($Ce^{3+}$). The presence of trivalent cerium enables the sintered body to exhibit a red color. The greater the amount of the trivalent cerium, the more likely it is that the zirconia sintered body has a strong red tone. Accordingly, it is preferable that the sintered body of the present embodiment include trivalent cerium in a large amount. Preferably, a mole ratio of the trivalent cerium to the total cerium in the sintered body is 50 mol% or greater, 60 mol% or greater, 70 mol% or greater or 80 mol% or greater and 100 mol% or less. Specifically, the mole ratio of the trivalent cerium may be 50 mol% or greater and 100 mol% or less, 60 mol% or greater and 100 mol% or less, 70 mol% or greater and 100 mol% or less or 80 mol% or greater and 100 mol% or less.

In the present embodiment, the mole ratio of the trivalent cerium to the total cerium can be determined from an X-ray absorption near edge structure spectrum (hereinafter also referred to as an "XANES spectrum") of the Ce-L3 absorption edge. Specifically, the XANES spectrum of each of the standards of trivalent cerium ($Ce^{3+}$) and tetravalent cerium ($Ce^{4+}$) is measured, and pattern fitting is performed on the XANES spectrum of the measurement sample with the XANES spectra of the standards; accordingly, the mole ratio of the trivalent cerium to the total cerium present in the sintered body can be calculated. It suffices if the standard for the trivalent cerium is $CeF_3$ and if the standard for the tetravalent cerium is $CeO_2$. The XANES spectrum can be measured as follows: an X-ray absorption fine structure spectrum (hereinafter also referred to as an "XAFS spectrum") is measured at a typical synchrotron radiation facility, such as SPring-8, and background correction is performed using an analysis program (e.g., Demeter (product name), by Bruce Ravel). The pattern fitting can be performed with this analysis program.

In the sintered body of the present embodiment, the content of the aluminum calculated as $Al_2O_3$ (hereinafter also simply referred to as an "aluminum content") is 0.05 mol% or greater and 4.0 mol% or less. If the aluminum content is less than 0.05 mol%, the tone becomes strongly orange. On the other hand, if the aluminum content is greater than 4.0 mol%, an aluminum compound becomes deposited on the sintered body, and these particles reflect incident light excessively; consequently, the sintered body has an orange tone. The aluminum content may be any content that is 0.05 mol% or greater, greater than 0.05 mol%, 0.08 mol% or greater or 0.1 mol% or greater and 4.0 mol% or less, 3.5 mol% or less or 3.0 mol% or less. Preferably, the aluminum content is, for example, 0.05 mol% or greater and 4.0 mol% or less, greater than 0.05 mol% and 4.0 mol% or less, 0.08 mol% or greater and 3.5 mol% or less or 0.1 mol% or greater and 3.0 mol% or less.

The toning element present in the sintered body of the present embodiment is at least one of alkaline earth metal elements and rare earth elements other than yttrium or cerium, and the ratio of an ionic radius of the toning element to an ionic radius of tetravalent zirconium ($Zr^{4+}$) (hereinafter, this ratio is also referred to as an "ionic radius ratio") is greater than 1.0 and 1.6 or less. Specifically, the toning element may be, for example, one or more selected from the group of calcium (Ca), magnesium (Mg), strontium (Sr), scandium (Sc), lutetium (Lu), ytterbium (Yb), thulium (Tm), erbium (Er), holmium (Ho), dysprosium (Dy), terbium (Tb), gadolinium (Gd), europium (Eu), samarium (Sm), neodymium (Nd), praseodymium (Pr) and lanthanum (La). The toning element is preferably one or more selected from the group of calcium, magnesium, erbium, holmium, dysprosium, terbium, gadolinium, europium, samarium, neodymium, praseodymium and lanthanum, is more preferably one or more selected from the group of calcium, magnesium, erbium, gadolinium, europium, neodymium and lanthanum, and is even more preferably at least one of neodymium and lanthanum. The toning element still even more preferably includes lanthanum and further more preferably is lanthanum.

If the element included has an ionic radius ratio of not greater than 1.0, the resulting sintered body has a dark red or brown tone, that is, does not exhibit a bright red color. On the other hand, if the element included has an ionic radius ratio of greater than 1.6, the dissolution of the element into the zirconia is difficult, and, therefore, the resulting sintered body cannot exhibit a bright red color under daylight. One possible reason for the exhibition of a bright red color under daylight due to the inclusion of an element having a specific ionic radius ratio is that the $Ce^{3+}$ dissolved in zirconia experiences a change in the electronic structure. Preferably, the toning element has an ionic radius ratio of greater than 1.0, 1.04 or greater, 1.1 or greater, 1.2 or greater or greater than 1.33 and 1.60 or less, 1.50 or less, 1.40 or less or 1.38 or less. The ionic radius ratio may be greater than 1.00 and 1.60 or less, 1.04 or greater and 1.50 or less, 1.10 or greater and 1.40 or less, 1.20 or greater and 1.38 or less, greater than 1.33 and 1.40 or less or greater than 1.33 and 1.38 or less. In cases where the ionic radius ratio of the toning element is greater than 1.33 and 1.40 or less or greater than 1.33 and 1.38 or less, both an a*/b* value and an $R_{700}/R_{600}$ value of the sintered body are likely to be high, and, therefore, such ionic radius radios are preferable.

The ionic radius ratio of the present embodiment can be determined as follows: ionic radii reported by Shannon (Acta. Crystallogr., A32, 751-67 (1976)) are rounded to the second decimal place, and these values are used in the following equation.

$$[\text{Ionic radius ratio}] =$$

$$[\text{Ionic radius of element}]/[\text{ionic radius of tetravalent zirconium } (Zr^{4+})]$$

The ionic radius of the element is an ionic radius of the 8-coordinate system and is the value of the trivalent state for rare earth elements and the value of the divalent state for Group 2 elements. Specific ionic radii of elements include 1.12 Å ($Ca^{2+}$), 0.89 Å ($Mg^{2+}$), 1.26 Å ($Sr^{2+}$), 0.87 Å ($Sc^{3+}$), 0.98 Å ($Lu^{3+}$), 0.99 Å ($Yb^{3+}$), 0.99 Å ($Tm^{3+}$), 1.00 Å ($Er^{3+}$), 1.02 Å ($Ho^{3+}$), 1.03 Å ($Dy^{3+}$), 1.04 Å ($Tb^{3+}$), 1.05 Å ($Gd^{3+}$), 1.07 Å ($Eu^{3+}$), 1.08 Å ($Sm^{3+}$), 1.11 Å ($Nd^{3+}$), 1.13 Å ($Pr^{3+}$), 1.16 Å ($La^{3+}$) and 0.84 Å ($Zr^{4+}$).

The ionic radius ratios are as follows: calcium: 1.33 ($Ca^{2+}/Zr^{4+}$), magnesium: 1.06 ($Mg^{2+}/Zr^{4+}$), strontium: 1.50 ($Sr^{2+}/Zr^{4+}$), scandium: 1.04 ($Sc^{3+}/Zr^{4+}$), lutetium: 1.17 ($Lu^{3+}/Zr^{4+}$), ytterbium: 1.18 ($Yb^{3+}/Zr^{4+}$), thulium: 1.18 ($Tm^{3+}/Zr^{4+}$), erbium: 1.19 ($Er^{3+}/Zr^{4+}$), holmium: 1.21 ($Ho^{3+}/Zr^{4+}$), dysprosium: 1.23 ($Dy^{3+}/Zr^{4+}$), terbium: 1.24 ($Tb^{3+}/Zr^{4+}$), gadolinium: 1.25 ($Gd^{3+}/Zr^{4+}$), europium: 1.27 ($Eu^{3+}/Zr^{4+}$), samarium: 1.29 ($Sm^{3+}/Zr^{4+}$), neodymium: 1.32 ($Nd^{3+}/Zr^{4+}$), praseodymium: 1.35 ($Pr^{3+}/Zr^{4+}$) and lanthanum: 1.38 ($La^{3+}/Zr^{4+}$).

In the sintered body of the present embodiment, the content of the toning element calculated as an oxide (hereinafter also simply referred to as a "toning element content") is greater than 0 mol% and 4.0 mol% or less. If the toning element content is 0 mol%, that is, no toning element is included, the tone becomes strongly orange, and, if the toning element content is greater than 4.0 mol%, the strength of the sintered body decreases; therefore, such contents are not preferable. If the toning element content is greater than 4.0 mol%, the tone of the sintered body becomes strongly orange, that is, the sintered body does not exhibit a bright red color. One possible reason for this is that a dispersed phase including the toning element is formed in the sintered body.

Preferably, the toning element content of the sintered body of the present embodiment is greater than 0 mol%, 0.2 mol% or greater, 0.3 mol% or greater, 0.5 mol% or greater or 0.8 mol% or greater and 4.0 mol% or less, 3.0 mol% or less, 2.5 mol% or less or 2.0 mol% or less. Regarding combinations of these upper limits and lower limits, the toning element content is preferably greater than 0 mol% and 4.0 mol% or less, 0.2 mol% or greater and 3.0 mol% or less, 0.3 mol% or greater and 2.5 mol% or less, 0.5 mol% or greater and 2.5 mol% or less or 0.5 mol% or greater and 2.0 mol% or less.

For example, in a sintered body including cerium, aluminum, yttrium and calcium (Ca) as a toning element, the yttrium content [mol%] is a ratio [mol%] of the moles of the yttrium, calculated as $Y_2O_3$, to the total moles of the zirconium, calculated as $ZrO_2$, and the yttrium, calculated as $Y_2O_3$, in the sintered body and can be determined by $\{Y_2O_3 \text{ [mol]}/(ZrO_2 + Y_2O_3) \text{ [mol]}\} \times 100$. In this sintered body, the cerium content [mol%] is a ratio [mol%] of the moles of the cerium, calculated as $CeO_2$, to the total moles of the zirconium, calculated as $ZrO_2$, the yttrium, calculated as $Y_2O_3$, the cerium, calculated as $CeO_2$, the toning element, calculated as an oxide, and the aluminum, calculated as $Al_2O_3$, in the sintered body and can be determined by $\{CeO_2 \text{ [mol]}/(ZrO_2 + Y_2O_3 + CeO_2 + CaO + Al_2O_3) \text{ [mol]}\} \times 100$. In this sintered body, the aluminum content [mol%] is a ratio [mol%] of the moles of the aluminum, calculated as $Al_2O_3$, to the total moles of the zirconium, calculated as $ZrO_2$, the yttrium, calculated as $Y_2O_3$, the cerium, calculated as $CeO_2$, the toning element, calculated as an oxide, and the aluminum, calculated as $Al_2O_3$, in the sintered body and can be determined by $\{Al_2O_3 \text{ [mol]}/(ZrO_2 + Y_2O_3 + CeO_2 + CaO +$

$Al_2O_3$) [mol]} $\times$ 100. In this sintered body, the toning element content [mol%] is a ratio [mol%] of the moles of the calcium, calculated as CaO, to the total moles of the zirconium, calculated as $ZrO_2$, the yttrium, calculated as $Y_2O_3$, the cerium, calculated as $CeO_2$, the calcium, calculated as CaO, and the aluminum, calculated as $Al_2O_3$, and can be determined by {CaO [mol]/($ZrO_2$ + $Y_2O_3$ + $CeO_2$ + CaO + $Al_2O_3$) [mol]} $\times$ 100.

In a case where the toning element includes magnesium, if an aluminum-magnesium spinel compound ($MgAl_2O_4$, hereinafter also simply referred to as a "spinel compound") is included in the sintered body, the color of the sintered body tends to become close to orange. For this reason, it is preferable that the sintered body of the present embodiment does not include any spinel compounds. In the case where the toning element includes magnesium, it is preferable that the magnesium content be low so that the formation of a spinel compound can be inhibited. Preferably, the magnesium content is 2.5 mol% or less or 2.0 mol% or less.

In the sintered body of the present embodiment, it is preferable that the toning element be dissolved in the zirconia. The dissolution of the toning element in the zirconia can be confirmed by a shift in an XRD peak corresponding to a cubic (400) plane to the low-angle side. The "XRD peak corresponding to a cubic (400) plane" is a peak having a peak top at $2\theta = 73.9 \pm 0.9°$ in an XRD pattern measured with CuK$\alpha$ radiation, which is used as a radiation source.

The peak top of the XRD peak corresponding to a cubic (400) plane of the sintered body of the present embodiment may have the following preferred ranges: $2\theta = 73.0°$ or greater and 73.9° or less, $2\theta = 73.1°$ or greater and 73.8° or less or $2\theta = 73.1°$ or greater and 73.7° or less, in an XRD pattern measured with CuK$\alpha$ radiation, which is used as a radiation source.

Preferably, the sintered body of the present embodiment is free of impurities. However, unavoidable impurities in zirconia, such as hafnia ($HfO_2$), may be present, and other impurities may be present to the extent that they do not impair the effects of the present embodiment. In the present embodiment, in cases where values derived from the composition, such as densities, are to be calculated, hafnia can be regarded as zirconia for the determination.

Preferably, the sintered body of the present embodiment does not include any spinel compounds. Regarding the inclusion of a spinel ($MgAl_2O_4$) compound in the sintered body, evaluations can be made by determining, in an XRD pattern, a ratio of a peak height of an XRD peak having a peak top at $2\theta = 37.0 \pm 0.3$ to a peak height of an XRD peak having a peak top at $2\theta = 30.0 \pm 0.3$ (hereinafter, this ratio is also referred to as a "spinel ratio"). In the present embodiment, in the case where the spinel ratio is 0.005 or less or 0.004 or less, a determination can be made that no spinel compounds are present.

The XRD pattern can be measured with a common X-ray diffractometer (instrument name: Ultima IV, manufactured by Rigaku Corporation). The measurement conditions include the following conditions.

Radiation source: CuK$\alpha$ radiation ($\lambda$ = 0.15418 nm)
Measurement mode: continuous scanning
Scan speed: 2°/minute
Measurement range: $2\theta$ = 26° to 76°
Acceleration voltage and current: 40 mA and 40 kV
Vertical divergence limiting slit: 10 mm
Divergence/entrance slit: 1°
Receiving slit: open
Detector: semiconductor detector (D/teX Ultra)
Filter: Ni filter
Goniometer radius: 185 mm

After the measurement is performed under the above measurement conditions, analysis can be performed with an analysis program accompanying the X-ray diffractometer (program name: Integrated X-ray powder diffraction software PDXL Ver. 2.2, available from Rigaku Corporation). The analysis conditions include the following conditions.

Peak shape: split pseudo-Voigt function
Background correction: straight line connecting endpoints

In the sintered body of the present embodiment, the zirconia preferably has a crystal structure including a tetragonal phase and a cubic phase, or the crystal structure may consist of a tetragonal phase, a cubic phase and a monoclinic phase.

A cubic phase fraction is a value determined from an XRD pattern of a surface of the sintered body, according to the equation below.

$$f_c = [I_c(400)]/[I_t(400) + I_t(004) + I_c(400)]$$

In this equation, $f_c$ is the cubic phase fraction, $I_c(400)$ is an integrated intensity of the cubic (400) plane, $I_t(004)$ is an integrated intensity of a tetragonal (004) plane and $I_t(400)$ is an integrated intensity of a tetragonal (400) plane.

The cubic phase fraction of the sintered body of the present embodiment may be, for example, 15% or greater, 20% or greater, 25% or greater or 30% or greater and 70% or less, 65% or less or 60% or less. Regarding combinations of these upper limits and lower limits, the cubic phase fraction is preferably 15% or greater and 70% or less, 20% or greater and 65% or less, 25% or greater and 60% or less or 30% or greater and 60% or less.

The XRD pattern and the integrated intensity of each of the crystal planes can be determined with a method similar to the method described above.

The XRD peaks corresponding to the respective crystal planes measured in the above-described XRD measurement have respective peak tops at the following 2θs, which are listed from the low-angle side to the high-angle side and correspond to the respective planes: the tetragonal (004) plane, the cubic (400) plane and the tetragonal (400) plane.

XRD peak corresponding to the tetragonal (004) plane: 2θ = 72.9 ± 0.4°
XRD peak corresponding to the cubic (400) plane: 2θ = 73.9 ± 0.9°
XRD peak corresponding to the tetragonal (400) plane: 2θ = 74.3 ± 0.4°

The sintered body of the present embodiment is a sintered body of zirconia that exhibits a red color (hereinafter also referred to as a "red zirconia sintered body"). In particular, the sintered body exhibits a bright red color under daylight. The bright red tone may be defined as having a ratio of color parameter a* to color parameter b* (hereinafter also referred to as "a*/b*") of 2.0 ≤ a*/b* according to an L*a*b* color system.

In the case where the a*/b* satisfies 2.0 ≤ a*/b*, the sintered body of the present embodiment exhibits a tone in which a red color stands out with respect to a yellow color. The a*/b* is 2.0 or greater or preferably 2.1 or greater and 4.0 or less or 3.5 or less.

Regarding the sintered body of the present embodiment, a bright red tone may be defined as having a lightness L* of 40 or greater and 60 or less, a color parameter a* of 10 ≤ a* ≤ 30 and a color parameter b* of 3 ≤ b* ≤ 13, according to the L*a*b* color system. More preferably, the tone may have a lightness L* of 45 or greater and 55 or less, a color parameter a* of 15 ≤ a* ≤ 30 and a color parameter b* of 3 ≤ b* ≤ 10.

In the present embodiment, the tone can be measured by a method conforming to the method of JIS Z 8722, and the measurement can be performed with a common spectrophotometer (e.g., CM-700d, manufactured by Konica Minolta, Inc.) under the following conditions.

Light source: D65 light source
Viewing angle: 10°
Measurement mode: SCI
Background: black
Measurement sample: (thickness of sample) 2.4 ± 0.1 mm
(Roughness of measurement surface) Ra ≤ 0.02 μm

As the value of the lightness L* increases, the tone becomes brighter, and conversely, as the L* decreases, the tone becomes darker. The color parameter a* represents tones ranging from red to green. As the value of a* increases, the red tone is intensified, and as the value decreases, the green tone is intensified. The value of b* represents tones ranging from yellow to blue. As the value of b* increases, the yellow tone is intensified, and as the value of b* decreases, the blue tone is intensified.

The sintered body of the present embodiment may have a reflectance for light having a wavelength of 700 nm (hereinafter, this reflectance is also referred to as "$R_{700}$"), and the reflectance may be 40% or greater, 45% or greater or 50% or greater and 90% or less, 85% or less or 80% or less. In these cases, the exhibition of a bright red color is likely to be enhanced, and, therefore, such reflectances are preferable. Regarding combinations of these upper limits and lower limits, $R_{700}$ is preferably 40% or greater and 90% or less, 45% or greater and 85% or less or 50% or greater and 80% or less. In addition, the sintered body of the present embodiment may have a reflectance for light having a wavelength of 600 nm (hereinafter, this reflectance is also referred to as "$R_{600}$"), and the reflectance may be 30% or less or 25% or less. In these cases, a brighter red color is likely to be exhibited while the exhibition of an orange tone is suppressed, and, therefore, such reflectances are preferable. Furthermore, the lower limit may be, for example, 10% or greater or 15% or greater. Regarding combinations of these upper limits and lower limits, $R_{600}$ is preferably 10% or greater and 30% or less, 10% or greater and 25% or less or 15% or greater and 25% or less.

Usually, when $R_{700}$ is high, the reflectance for light having wavelengths close to the wavelength is high. However, in the sintered body of the present embodiment, because of the inclusion of aluminum and the inclusion of a toning element in the above-described content, the wavelength of light absorbed by the sintered body changes. As a result, $R_{600}$ is low even when $R_{700}$ is high. As a result, the sintered body of the present embodiment exhibits a brighter red color under daylight. In the sintered body of the present embodiment, a ratio of $R_{700}$ to $R_{600}$ (hereinafter also referred to as "$R_{700}/R_{600}$") is preferably 2.4 or greater or 2.5 or greater, and the ratio may be any value that is 3.5 or less or 3.3 or less. The combination of the upper limit and the lower limit of the $R_{700}/R_{600}$ is preferably 2.4 or greater and 3.5 or less and more preferably 2.5 or greater and 3.3 or less.

The reflectance can be determined from a diffuse reflection spectrum, which can be measured with an ultraviolet-visible-near-infrared spectrophotometer (e.g., V-650, manufactured by JASCO Corporation) equipped with an integrating sphere unit (e.g., ILV-724, manufactured by JASCO Corporation); the measurement can be performed under the following conditions after baseline correction is performed with a standard reflector.

Standard reflector: Spectloran (registered trademark)
Measurement wavelength range: 380 to 780 nm
Measurement mode: %R
Data acquisition interval: 0.5 nm
UV/Vis bandwidth: 5.0 nm
Response: Fast
Scan speed: 1000 nm/min
Light source: WI
Specular component: included
Filter switching: stepped

The sintered body of the present embodiment may have a measured density of 5.8 g/cm³ or greater, or more preferably, the measured density is 5.9 g/cm³ or greater. The upper limit of the measured density of the sintered body of the present embodiment may be 6.3 g/cm³ or less or 6.2 g/cm³ or less. Specifically, the measured density of the sintered body of the present embodiment is preferably 5.8 g/cm³ or greater and 6.3 g/cm³ or less or 5.9 g/cm³ or greater and 6.2 g/cm³ or less.

In the present embodiment, the measured density of the sintered body can be determined according to a method conforming to JIS R 1634:1998. Specifically, the measured density can be determined as a mass of the sintered body relative to a volume of the sintered body; the mass is determined by mass measurement, and the volume is determined by an Archimedes method.

The sintered body of the present embodiment may have a shape that is, for example, at least one selected from the group of spherical shapes, generally spherical shapes, elliptical shapes, disc shapes, cylindrical shapes, cubic shapes, rectangular parallelepiped shapes, polyhedral shapes and generally polyhedral shapes. The shape may be any shape suitable for purposes, including various applications.

The sintered body of the present embodiment has a three-point flexural strength of any value that is 800 MPa or greater or 900 MPa or greater and 1300 MPa or less or 1200 MPa or less. Preferably, the three-point flexural strength is 800 MPa or greater and 1300 MPa or less or 900 MPa or greater and 1200 MPa or less.

The three-point flexural strength can be measured with a three-point bending test conforming to JIS R 1601. The measurement is to be performed ten times, and an average of the results is to be the three-point flexural strength. The measurement can be performed on a sample of the sintered body having a columnar shape with a width of 4 mm and a thickness of 3 mm, with a support span of 30 mm.

A method for producing the sintered body of the present embodiment may be any method. A preferred method for producing the sintered body of the present embodiment may be a method for producing a sintered body comprising:

a molding step of molding a powder composite to form a green body, the powder composite including a cerium source, an aluminum source, an yttrium-containing-zirconia source and a toning element source, wherein

a content of cerium, calculated as $CeO_2$, is 1.5 mol% or greater and 6.0 mol% or less,
a content of aluminum, calculated as $Al_2O_3$, is 0.05 mol% or greater and 4.0 mol% or less,
a content of yttrium, calculated as $Y_2O_3$, is 2.0 mol% or greater and 6.0 mol% or less,
a content of a toning element, calculated as an oxide, is greater than 0 mol% and 4.0 mol% or less,
the toning element source is a compound containing at least one of alkaline earth metal elements and rare earth elements other than yttrium or cerium, and
a ratio of an ionic radius of the toning element to an ionic radius of tetravalent zirconium ($Zr^{4+}$) is greater than 1.0 and 1.6 or less,

a step of subjecting the green body to pressureless sintering to form a primary sintered body, and
a secondary sintering step of sintering the primary sintered body in a reducing atmosphere.

The powder composite can be prepared by mixing the cerium source, the aluminum source, the yttrium-containing-zirconia source and the toning element source together. The cerium source, the aluminum source, the yttrium-containing-zirconia source and the toning element source may have any composition similar to the composition of the sintered body desired to be obtained, and it is sufficient that their respective starting materials be included as powders.

The cerium source may be any cerium-containing material that may be one or more selected from the group of oxides, hydroxides, oxyhydroxides, halides, sulfuric acid salts, acetic acid salts and nitric acid salts. The cerium source is preferably one or more selected from the group of oxides, hydroxides, oxyhydroxide and chlorides, more preferably one or more selected from the group of oxides, hydroxides and chlorides, and even more preferably an oxide.

The cerium source may be in any form that is a powder form, and, preferably, the cerium source has an average particle size of 3.0 μm or less, 2.0 μm or less or 1.0 μm or less and 0.01 μm or greater, 0.05 μm or greater or 0.1 μm or greater. Combinations of the upper limit and the lower limit of the average particle size of the cerium source may include, for example, 0.01 μm or greater and 3.0 μm or less, 0.05 μm or greater and 2.0 μm or less and 0.1 μm or greater and 1.0 μm or less.

Preferably, the cerium source has a purity of 99.0 mass% or greater or 99.9 mass% or greater.

The aluminum source may be any powder that is at least one of a powder of alumina ($Al_2O_3$) and a powder of an aluminum compound that is a precursor of the alumina. The aluminum source may be at least one from the group consisting of alumina, aluminum hydroxide, aluminum nitrate and aluminum chloride and is preferably alumina and more preferably α-alumina.

Preferably, the aluminum source has an average particle size of 1.0 μm or less, 0.7 μm or less or 0.5 μm or less and 0.01 μm or greater, 0.05 μm or greater or 0.1 μm or greater. Combinations of the upper limit and the lower limit of the average particle size of the aluminum source may include, for example, 0.01 μm or greater and 1.0 μm or less, 0.05 μm or greater and 0.7 μm or less or 0.1 μm or greater and 0.5 μm or less.

Preferably, the aluminum source has a purity of 99.0 mass% or greater or 99.9 mass% or greater.

Preferably, the yttrium-containing-zirconia source is a zirconia that contains yttrium in an amount of 2.0 mol% or greater and less than 6.0 mol%.

Preferably, the yttrium-containing-zirconia source has a BET specific surface area of 5 $m^2$/g or greater and 20 $m^2$/g or less or 5 $m^2$/g or greater and 17 $m^2$/g or less. Preferably, the crystalline phase of the zirconia of the stabilizing-element-containing-zirconia source includes at least a tetragonal phase in the crystal structure of the zirconia, and a ratio of the tetragonal phase in the crystal structure is 50% or greater.

Preferably, the yttrium-containing-zirconia source has a purity of 99.6 mass% or greater or 99.8 mass%.

The yttrium-containing-zirconia source may include, in addition to or in place of the yttrium-containing zirconia, at least one of an yttrium source and a zirconia source.

The yttrium source may be one or more selected from the group of yttria, yttrium hydroxide and yttrium chloride. The yttrium source is preferably at least one of yttria and yttrium chloride and more preferably yttria.

The zirconia source may be at least one of zirconia and zirconium hydroxide and is preferably zirconia.

The toning element source may be any toning-element-containing material that may be one or more selected from the group of oxides, hydroxides, oxyhydroxides, halides, sulfuric acid salts, acetic acid salts and nitric acid salts. The toning element source is preferably one or more selected from the group of oxides, hydroxides, oxyhydroxide and chlorides, more preferably one or more selected from the group of oxides, hydroxides and chlorides, and even more preferably an oxide.

Preferably, the powder of the toning element source has a purity of 98.0 mass% or greater.

The toning element present in the toning element source is preferably one or more selected from the group of calcium, magnesium, erbium, holmium, dysprosium, terbium, gadolinium, europium, samarium, neodymium, praseodymium and lanthanum, more preferably one or more selected from the group of calcium, magnesium, erbium, gadolinium, europium, neodymium and lanthanum, even more preferably at least one of neodymium and lanthanum and still even more preferably lanthanum.

Preferably, the powder composite includes the above-described various starting materials in a homogeneous state.

The powder composite may be produced by any method as long as the various starting materials become homogeneous. A preferred method for producing the powder composite is a production method including a step of performing mixing by using one or more selected from the group of wet mixing, ball mill mixing and stirred mill mixing; preferably, the production method includes a step of performing mixing by using ball mill mixing.

Preferably, the ball mill mixing is performed by grinding and mixing a slurry obtained by mixing the powder composite with water or an alcohol.

The slurry may be dried by any method. Preferably, the method is one or more selected from the group of static drying, spray drying that uses a dual-fluid nozzle and spray drying that uses an atomizer method.

The mixing step may be followed by a granulation step for granulating the resulting powder composite. The granulation of the powder composite may be performed by any method that allows the powder to be loosely agglomerated, and, for example, the method may be spray granulation.

The molding step is to mold the powder composite to form a green body.

In the molding step, the molding may be performed by any method that can mold the powder composite into a desired shape. The method for the molding may be, for example, one or more selected from the group of uniaxial pressing, cold isostatic pressing, slip casting and injection molding or at least one of uniaxial pressing and cold isostatic pressing. The green body may have any shape in which the shape of the sintered body desired to be obtained and thermal shrinkage due to sintering are taken into account. The shape of the green body may be, for example, one or more selected from the group of disc shapes, columnar shapes, plate shapes, spherical shapes and generally spherical shapes.

The primary sintering step is to subject the green body resulting from the molding step to pressureless sintering to form a primary sintered body.

The sintering temperature is preferably 1400°C or greater and 1600°C or less and more preferably 1500°C or greater and 1600°C or less.

A heat treatment atmosphere may be an oxidizing atmosphere and, preferably, an air atmosphere.

A sintering time may be any amount of time appropriately adjusted according to the size of the green body that is used in the primary sintering step and the properties of a sintering furnace. For example, the sintering time may be 2 hours or more and 6 hours or less or 2 hours or more and 4 hours or less.

The secondary sintering step is to sinter, in a reducing atmosphere, the primary sintered body resulting from the primary sintering step.

The sintering temperature is preferably 1300°C or greater and 1500°C or less and more preferably 1400°C or greater and 1500°C or less.

The reducing atmosphere may be, for example, a mixed atmosphere of a reducing gas and an inert gas. Regarding a mixing ratio between the reducing gas and the inert gas of the reducing atmosphere, it is preferable that a volume ratio of the reducing gas be 3% or greater and 10% or less or 5% or greater and 10% or less.

The reducing gas is preferably at least one of hydrogen and carbon monoxide and more preferably hydrogen. The inert gas is preferably at least one of nitrogen and argon and more preferably argon. The reducing atmosphere is preferably a mixed atmosphere of hydrogen and argon.

The sintering time may be any amount of time appropriately adjusted according to the size of the primary sintered body that is used in the secondary sintering step and the properties of a sintering furnace. For example, the sintering time may be 1 hour or more and 6 hours or less or 1 hour or more and 4 hours or less.

The secondary sintering step can be performed by a method known in the art, which may be, for example, one or more selected from the group consisting of pressure sintering, vacuum sintering and pressureless sintering. It is preferable that the secondary sintering be pressureless sintering because pressureless sintering is simple and easy to apply industrially. Furthermore, it is preferable that the secondary sintering step does not involve sintering other than pressureless sintering and that no step of pressure sintering be included.

The production method of the present embodiment may include at least one of a polishing step for polishing the sintered body and a forming step for forming the shape. The polishing step is to polish a surface of the sintered body after sintering. The polishing can, for example, impart gloss to the surface and, therefore, enable the sintered body to have surface conditions suitable for an intended use. The forming step is to form the sintered body into a desired shape. Accordingly, the sintered body can be formed to have a shape suitable for an intended use. Either of the polishing step and the forming step may be performed prior to the other.

EXAMPLES

The present disclosure will be described in detail below with reference to Examples. Note that the present disclosure is not limited to the Examples.

(Measurement of Measured Density)

The measured density of the sintered body was determined according to the method described in JIS R 1634:1998. Specifically, the measured density of the sintered body was calculated as a mass of the sintered body relative to a volume of the sintered body; the mass was determined by mass measurement, and the volume was determined by an Archimedes method.

(Measurement of Tone)

The tone of a sample of the sintered body was measured according to a method conforming to JIS Z8722. The measurement was performed with a common spectrophotometer (instrument name: CM-700d, manufactured by Konica Minolta, Inc.). The measurement conditions were as follows. For the measurement of the tone, the SCI method was used, in which the measurement was performed with specular light being included, in addition to diffuse reflected light.

Light source: D65 light source
Viewing angle: 10°
Measurement mode: SCI
Background: black background
Measurement sample: (thickness of sample) 2.4 ± 0.1 mm
(Roughness of measurement surface) Ra ≤ 0.02 μm

The sample of the sintered body used was a sintered body that had been subjected to one-side mirror polishing such that the sample had a thickness of 2.4 ± 0.1 mm and a roughness Ra of the measurement surface of ≤ 0.02 μm. The measurement was performed on the surface.

(Measurement of Reflectance)

The measurement of the reflectance was performed with an ultraviolet-visible-near-infrared spectrophotometer (instrument name: V-670, manufactured by JASCO Corporation). A dedicated integrating sphere unit was used, and light produced by light sources (a deuterium lamp and a halogen lamp) was projected onto the sample for the measurement. The sample of the sintered body used was a sintered body that had been subjected to one-side mirror polishing such that the sample had a thickness of 2.4 ± 0.1 mm and a roughness Ra of the measurement surface of ≤ 0.02 μm. The measurement was performed on the surface. The measurement conditions were as follows.

Integrating sphere unit: ILV-724 (150 mmφ)
Photometric mode: %R
Measurement range: 380 nm to 780 nm
Data acquisition interval: 0.5 nm
Bandwidth: 5.0 nm
Response: Fast
Scan speed: 1000 nm/min
Light source: automatic
Source changeover: 340.0 nm
Filter switching: stepped
Baseline correction: baseline

(Measurement of Crystalline Phase)

The crystalline phases were determined by XRD measurement performed with an X-ray diffractometer (instrument name: Ultima IV, manufactured by Rigaku Corporation) under the following conditions.

Radiation source: CuK$\alpha$ radiation ($\lambda$ = 0.15418 nm)
Measurement mode: continuous scanning
Scan speed: 2°/minute
Measurement range: $2\theta$ = 26° to 76°
Acceleration voltage and current: 40 mA and 40 kV
Vertical divergence limiting slit: 10 mm
Divergence/entrance slit: 1°
Receiving slit: open

Detector: semiconductor detector (D/teX Ultra)
Filter: Ni filter
Goniometer radius: 185 mm

The determination of the crystalline phases was performed with the analysis program accompanying the X-ray diffractometer (program name: Integrated X-ray powder diffraction software PDXL Ver. 2.2, available from Rigaku Corporation). Specifically, the XRD pattern was subjected to smoothing and background removal, and after these processes, the XRD pattern was subjected to profile fitting that used a split pseudo-Voigt function. The cubic phase fraction was determined from the XRD pattern of the surface of the sintered body, according to the equation shown above. The sample of the sintered body used was a sintered body that had been subjected to one-side mirror polishing such that the sample had a thickness of $2.4 \pm 0.1$ mm and a roughness Ra of the measurement surface of $\leq 0.02$ μm.

(Three-Point Flexural Strength)

The three-point flexural strength was measured with a three-point bending test conforming to JIS R 1601. The measurement was performed ten times, and an average of the results was determined as the three-point flexural strength. The measurement was performed on a sample of the sintered body having a columnar shape with a width of 4 mm and a thickness of 3 mm, with a support span of 30 mm.

Example 1

A mixed powder having the composition described below was prepared by mixing 47.26 g of a 3.0 mol% yttrium-containing zirconia (TZ-3YS, manufactured by Tosoh Corporation), 2.50 g of cerium oxide (purity: 99.9%, average particle size: 0.8 μm), 0.12 g of calcium oxide (purity: 98% or greater) and 0.12 g of an aluminum oxide powder (purity: 99.9% or greater, average particle size: 0.3 μm, generally spherical) with purified water. The mixing was carried out by wet mixing in a ball mill that used zirconia balls of 10 mm diameter as a grinding medium. This process was performed for 24 hours. After the mixing, drying was performed in an air atmosphere at $110 \pm 15°C$ for 18 hours to give a raw material powder having the following molar composition.
$CeO_2$: 3.7 mol%
CaO: 0.5 mol%
$Al_2O_3$: 0.3 mol%
3 mol% $Y_2O_3$-containing $ZrO_2$: balance (95.5 mol%)

(Primary Sintering)

The raw material powder was loaded into a cylindrical mold and uniaxially pressed at a pressure of 98 MPa to form a cylindrical green body having a diameter of 25 mm and a thickness of 3.6 mm. Primary sintering was performed by sintering the resulting green body in a muffle furnace for 2 hours by using a heating rate of 100°C/hour, an air atmosphere and a temperature of 1550°C. Subsequently, the resultant was cooled to room temperature at a cooling rate of 200°C/hour to form a primary sintered body. The resulting primary sintered body exhibited a yellow color derived from tetravalent cerium.

(Secondary Sintering)

The primary sintered body was placed in a tubular furnace equipped with an alumina furnace tube having an inside diameter of 50 mm, an outside diameter of 60 mm and a full length of 100 mm and was heat-treated for 1 hour by using a heating rate of 500°C/hour, a reducing atmosphere and a temperature of 1450°C. Accordingly, a sintered body was obtained and used as a sintered body of this Example. The reducing atmosphere was a hydrogen-argon flowing atmosphere (flow rate: 1 L/min) that used a hydrogen (5%) and argon (95%) gas. The sintered body of this Example exhibited a red color. Furthermore, the sintered body of this Example had a crystal structure including a tetragonal phase and a cubic phase.

Example 2

A sintered body of this Example was prepared in a manner similar to that of Example 1, except that magnesium oxide (purity: 98% or greater) was used instead of calcium oxide to prepare a mixed powder having the following molar composition. The sintered body of this Example had a spinel ratio of 0.

CeO$_2$: 3.7 mol%
MgO: 0.5 mol%
Al$_2$O$_3$: 0.3 mol%
3 mol% Y$_2$O$_3$-containing ZrO$_2$: balance (95.5 mol%)

Example 3

A sintered body of this Example was prepared in a manner similar to that of Example 1, except that strontium oxide (purity: 99.9% or greater) was used instead of calcium oxide to prepare a mixed powder having the following molar composition.

CeO$_2$: 3.7 mol%
SrO: 0.5 mol%
Al$_2$O$_3$: 0.3 mol%
3 mol% Y$_2$O$_3$-containing ZrO$_2$: balance (95.5 mol%)

Example 4

A sintered body of this Example was prepared in a manner similar to that of Example 1, except that scandium oxide (purity: 99.9%) was used instead of calcium oxide to prepare a mixed powder having the following molar composition.

CeO$_2$: 3.7 mol%
Sc$_2$O$_3$: 0.5 mol%
Al$_2$O$_3$: 0.3 mol%
3 mol% Y$_2$O$_3$-containing ZrO$_2$: balance (95.5 mol%)

Example 5

A sintered body of this Example was prepared in a manner similar to that of Example 1, except that lutetium oxide (purity: 99.5%) was used instead of calcium oxide to prepare a mixed powder having the following molar composition.

CeO$_2$: 3.7 mol%
Lu$_2$O$_3$: 0.5 mol%
Al$_2$O$_3$: 0.3 mol%
3 mol% Y$_2$O$_3$-containing ZrO$_2$: balance (95.5 mol%)

Example 6

A sintered body of this Example was prepared in a manner similar to that of Example 1, except that erbium oxide (purity: 99.99%) was used instead of calcium oxide to prepare a mixed powder having the following molar composition.

CeO$_2$: 3.7 mol%
Er$_2$O$_3$: 0.5 mol%
Al$_2$O$_3$: 0.3 mol%
3 mol% Y$_2$O$_3$-containing ZrO$_2$: balance (95.5 mol%)

Example 7

A sintered body of this Example was prepared in a manner similar to that of Example 1, except that gadolinium oxide (purity: 99.9%) was used instead of calcium oxide to prepare a mixed powder having the following molar

composition.

CeO$_2$: 2.2 mol%
Gd$_2$O$_3$: 0.5 mol%
Al$_2$O$_3$: 0.3 mol%
3 mol% Y$_2$O$_3$-containing ZrO$_2$: balance (97.0 mol%)

Example 8

A sintered body of this Example was prepared in a manner similar to that of Example 1, except that neodymium oxide (purity: 99.9%) was used instead of calcium oxide to prepare a mixed powder having the following molar composition.

CeO$_2$: 3.7 mol%
Nd$_2$O$_3$: 0.5 mol%
Al$_2$O$_3$: 0.3 mol%
3 mol% Y$_2$O$_3$-containing ZrO$_2$: balance (95.5 mol%)

Example 9

A sintered body of this Example was prepared in a manner similar to that of Example 1, except that lanthanum oxide (purity: 99.9%) was used instead of calcium oxide to prepare a mixed powder having the following molar composition.

CeO$_2$: 3.7 mol%
La$_2$O$_3$: 0.5 mol%
Al$_2$O$_3$: 0.3 mol%
3 mol% Y$_2$O$_3$-containing ZrO$_2$: balance (95.5 mol%)

Example 10

A sintered body of this Example was prepared in a manner similar to that of Example 1, except that lanthanum oxide (purity: 99.9%) was used instead of calcium oxide to prepare a mixed powder having the following molar composition.

CeO$_2$: 3.7 mol%
La$_2$O$_3$: 1.0 mol%
Al$_2$O$_3$: 0.3 mol%
3 mol% Y$_2$O$_3$-containing ZrO$_2$: balance (95.0 mol%)

Example 11

A sintered body of this Example was prepared in a manner similar to that of Example 1, except that lanthanum oxide (purity: 99.9%) was used instead of calcium oxide and that the composition of the mixed powder was the following molar composition. The three-point flexural strength of this Example was 999 MPa.

CeO$_2$: 3.8 mol%
La$_2$O$_3$: 1.0 mol%
Al$_2$O$_3$: 1.3 mol%
3 mol% Y$_2$O$_3$-containing ZrO$_2$: balance (93.9 mol%)

Example 12

A sintered body of this Example was prepared in a manner similar to that of Example 1, except that lanthanum oxide (purity: 99.9%) was used instead of calcium oxide and that the composition of the mixed powder was the following molar composition.

$CeO_2$: 3.9 mol%
$La_2O_3$: 2.0 mol%
$Al_2O_3$: 0.3 mol%
3 mol% $Y_2O_3$-containing $ZrO_2$: balance (93.8 mol%)

Example 13

A sintered body of this Example was prepared in a manner similar to that of Example 1, except that lanthanum oxide (purity: 99.9%) was used instead of calcium oxide and that the composition of the mixed powder was the following molar composition.

$CeO_2$: 3.8 mol%
$La_2O_3$: 0.5 mol%
$Al_2O_3$: 0.1 mol%
3 mol% $Y_2O_3$-containing $ZrO_2$: balance (95.6 mol%)

Example 14

A sintered body of this Example was prepared in a manner similar to that of Example 1, except that lanthanum oxide (purity: 99.9%) was used instead of calcium oxide and that the composition of the mixed powder was the following molar composition.

$CeO_2$: 3.7 mol%
$La_2O_3$: 0.5 mol%
$Al_2O_3$: 1.3 mol%
3 mol% $Y_2O_3$-containing $ZrO_2$: balance (94.5 mol%)

Example 15

A sintered body of this Example was prepared in a manner similar to that of Example 1, except that lanthanum oxide (purity: 99.9%) was used instead of calcium oxide and that the composition of the mixed powder was the following molar composition.

$CeO_2$: 3.7 mol%
$La_2O_3$: 0.5 mol%
$Al_2O_3$: 2.5 mol%
3 mol% $Y_2O_3$-containing $ZrO_2$: balance (93.3 mol%)

Example 16

A sintered body of this Example was prepared in a manner similar to that of Example 1, except that lanthanum oxide (purity: 99.9%) was used instead of calcium oxide and that the composition of the mixed powder was the following molar composition.

$CeO_2$: 2.2 mol%
$La_2O_3$: 0.5 mol%
$Al_2O_3$: 0.3 mol%

3 mol% $Y_2O_3$-containing $ZrO_2$: balance (97.0 mol%)

Example 17

A sintered body of this Example was prepared in a manner similar to that of Example 1, except that lanthanum oxide (purity: 99.9%) was used instead of calcium oxide and that the composition of the mixed powder was the following molar composition.
CeO$_2$: 4.9 mol%
La$_2$O$_3$: 0.5 mol%
Al$_2$O$_3$: 0.3 mol%
3 mol% $Y_2O_3$-containing $ZrO_2$: balance (94.3 mol%)

Example 18

An aqueous zirconium oxychloride solution was hydrolyzed to give a hydrated zirconia sol. Yttria ($Y_2O_3$) was added to the hydrated zirconia sol such that an yttria concentration of 2.5 mol% was achieved. Subsequently, the resultant was dried and calcined at 1160°C for 2 hours to give an yttria-containing zirconia calcined powder (specific surface area: 5 m$^2$/g). The resulting calcined powder was washed with distilled water, and subsequently, the resultant was dried at 110°C to give a 2.5 mol% yttria-containing zirconia powder. A sintered body of this Example was prepared in a manner similar to that of Example 1, except that the 2.5 mol% yttria-containing zirconia powder was used and that lanthanum oxide (purity: 99.9%) was used instead of calcium oxide, to prepare a mixed powder having the following molar composition.
CeO$_2$: 3.7 mol%
La$_2$O$_3$: 0.5 mol%
Al$_2$O$_3$: 0.3 mol%
2.5 mol% $Y_2O_3$-containing $ZrO_2$: balance (95.5 mol%)

Example 19

A sintered body of this Example was prepared in a manner similar to that of Example 1, except that 4.0 mol% yttria-containing zirconia (TZ-4YS, manufactured by Tosoh Corporation, specific surface area: 7 m$^2$/g, purity: 99.8% or greater) was used, that a lanthanum oxide powder (purity: 99.9%) was used instead of calcium oxide, and that the composition of the mixed powder was the following molar composition.

CeO$_2$: 3.8 mol%
La$_2$O$_3$: 0.5 mol%
Al$_2$O$_3$: 0.3 mol%
4 mol% $Y_2O_3$-containing $ZrO_2$: balance (95.4 mol%)

Comparative Example 1

A sintered body of this Comparative Example was prepared in a manner similar to that of Example 1, except that no aluminum oxide was used, that lanthanum oxide (purity: 99.9%) was used instead of calcium oxide, and that the composition of the mixed powder was the following molar composition.
CeO$_2$: 3.8 mol%
La$_2$O$_3$: 0.5 mol%
(Al$_2$O$_3$: 0.0 mol%)
3 mol% $Y_2O_3$-containing $ZrO_2$: balance (95.7 mol%)

Comparative Example 2

A sintered body of this Comparative Example was prepared in a manner similar to that of Example 1, except that no calcium oxide was used, that a 4.0 mol% yttria-containing zirconia powder (TZ-4YS, manufactured by Tosoh, specific

surface area: 7 m$^2$/g, purity: 99.8% or greater) was used as the zirconia, and that the composition of the mixed powder was the following molar composition.

CeO$_2$: 3.8 mol%
Al$_2$O$_3$: 0.3 mol%
4 mol% Y$_2$O$_3$-containing ZrO$_2$: balance (95.9 mol%)

Comparative Example 3

A sintered body of this Comparative Example was prepared in a manner similar to that of Example 1, except that niobium oxide (purity: 99.9%) was used instead of calcium oxide and that the composition of the mixed powder was the following molar composition.

CeO$_2$: 2.2 mol%
Nb$_2$O$_5$: 0.5 mol%
Al$_2$O$_3$: 0.3 mol%
3 mol% Y$_2$O$_3$-containing ZrO$_2$: balance (97.0 mol%)

The content of the Nb$_2$O$_5$ in the mixed powder and the sintered body was determined according to the following equation, based on the method for measuring the toning element content.

$$\text{Content [mol\%] of Nb}_2\text{O}_5$$

$$= \{(\text{Nb}_2\text{O}_5)/(\text{ZrO}_2 + \text{Y}_2\text{O}_3 + \text{CeO}_2 + \text{Al}_2\text{O}_3 + \text{Nb}_2\text{O}_5)\} \times 100$$

Regarding the ionic radius ratio of niobium (Nb) to Zr, the ionic radius ratio with respect to Zr was calculated in a manner similar to that of the other toning elements, by using an ionic radius of niobium of 0.74 Å (Nb$^{5+}$). The result was 0.88 (Nb$^{5+}$/Zr$^{4+}$).

Comparative Example 4

A sintered body of this Comparative Example was prepared in a manner similar to that of Example 1, except that lanthanum oxide (purity: 99.9%) was used instead of calcium oxide, to prepare a mixed powder having the following molar composition.

CeO$_2$: 3.7 mol%
La$_2$O$_3$: 4.1 mol%
Al$_2$O$_3$: 0.3 mol%
3 mol% Y$_2$O$_3$-containing ZrO$_2$: balance (91.9 mol%)

[Table 1]

| | Composition [mol%] | | | Toning Element | |
| --- | --- | --- | --- | --- | --- |
| | CeO$_2$ | Al$_2$O$_3$ | Toning Element | Species | Ionic Radius Ratio |
| Example 1 | 3.7 | 0.3 | 0.5 | CaO | 1.33 |
| Example 2 | 3.7 | 0.3 | 0.5 | MgO | 1.06 |
| Example 3 | 3.7 | 0.3 | 0.5 | SrO$_2$ | 1.50 |
| Example 4 | 3.7 | 0.3 | 0.5 | Sc$_2$O$_3$ | 1.04 |
| Example 5 | 3.7 | 0.3 | 0.5 | Lu$_2$O$_3$ | 1.17 |
| Example 6 | 3.7 | 0.3 | 0.5 | Er$_2$O$_3$ | 1.19 |

(continued)

|  | Composition [mol%] | | | Toning Element | |
|---|---|---|---|---|---|
|  | $CeO_2$ | $Al_2O_3$ | Toning Element | Species | Ionic Radius Ratio |
| Example 7 | 2.2 | 0.3 | 0.5 | $Gd_2O_3$ | 1.25 |
| Example 8 | 3.7 | 0.3 | 0.5 | $Nd_2O_3$ | 1.32 |
| Example 9 | 3.7 | 0.3 | 0.5 | $La_2O_3$ | 1.38 |
| Comparative Example 1 | 3.7 | 0 | 0.5 | $La_2O_3$ | 1.38 |
| Comparative Example 2 | 3.8 | 0.3 | 0 |  |  |
| Comparative Example 3 | 2.2 | 0.3 | 0.5 | $Nb_2O_5$ | 0.88 |

[Table 2]

|  | Composition [mol%] | | | |
|---|---|---|---|---|
|  | $Y_2O_3$ | $CeO_2$ | $Al_2O_3$ | $La_2O_3$ |
| Example 10 | 3.0 | 3.7 | 0.3 | 1.0 |
| Example 11 | 3.0 | 3.8 | 1.3 | 1.0 |
| Example 12 | 3.0 | 3.9 | 0.3 | 2.0 |
| Example 13 | 3.0 | 3.8 | 0.1 | 0.5 |
| Example 14 | 3.0 | 3.7 | 1.3 | 0.5 |
| Example 15 | 3.0 | 3.7 | 2.5 | 0.5 |
| Example 16 | 3.0 | 2.2 | 0.3 | 0.5 |
| Example 17 | 3.0 | 4.9 | 0.3 | 0.5 |
| Example 18 | 2.5 | 3.7 | 0.3 | 0.5 |
| Example 19 | 4.0 | 3.8 | 0.3 | 0.5 |
| Comparative Example 4 | 3.0 | 3.7 | 0.3 | 4.1 |

[Table 3]

|  | $L^*$ | $a^*$ | $b^*$ | $a^*/b^*$ | $R_{700}/R_{600}$ | Density of Sintered Body $(g/cm^3)$ | Cubic Phase Fraction (%) | Peak Position of Cubic Phase (400) (°) |
|---|---|---|---|---|---|---|---|---|
| Example 1 | 49.3 | 18.2 | 7.6 | 2.4 | 2.8 | 6.206 | 39.5 | 73.6 |
| Example 2 | 48.5 | 16.4 | 6.6 | 2.5 | 2.8 | 6.043 | 40.4 | 73.6 |
| Example 3 | 48.4 | 15.1 | 5.8 | 2.6 | 2.5 | 6.067 | 35.6 | 73.5 |
| Example 4 | 49.5 | 19.4 | 8.6 | 2.3 | 2.7 | 5.995 | 39.7 | 73.7 |
| Example 5 | 49.5 | 18.2 | 7.8 | 2.3 | 2.8 | 6.082 | 40.1 | 73.6 |
| Example 6 | 49.2 | 17.2 | 7.1 | 2.4 | 2.9 | 6.095 | 41.9 | 73.6 |
| Example 7 | 49.0 | 17.1 | 6.9 | 2.5 | 2.7 | 6.097 | 41.2 | 73.7 |
| Example 8 | 49.1 | 17.6 | 7.2 | 2.4 | 2.9 | 6.072 | 42.4 | 73.5 |
| Example 9 | 48.4 | 15.7 | 6.0 | 2.6 | 2.9 | 6.076 | 40.0 | 73.4 |
| Example 10 | 48.6 | 17.3 | 7.2 | 2.4 | 2.9 | 6.085 | 40.2 | 73.3 |
| Example 11 | 49.7 | 19.6 | 8.6 | 2.3 | 2.8 | 6.025 | 39.4 | 73.3 |
| Example 12 | 49.7 | 19.1 | 8.3 | 2.3 | 2.6 | 6.083 | 39.0 | 73.2 |

(continued)

| | L* | a* | b* | a*/b* | $R_{700}/R_{600}$ | Density of Sintered Body (g/cm³) | Cubic Phase Fraction (%) | Peak Position of Cubic Phase (400) (°) |
|---|---|---|---|---|---|---|---|---|
| Example 13 | 50.6 | 20.9 | 9.9 | 2.1 | 2.6 | 5.999 | 38.7 | 73.4 |
| Example 14 | 49.4 | 19.1 | 8.3 | 2.3 | 2.8 | 6.009 | 39.4 | 73.4 |
| Example 15 | 50.0 | 20.2 | 9.1 | 2.2 | 2.7 | 6.021 | 37.6 | 73.4 |
| Example 16 | 49.7 | 18.6 | 8.1 | 2.3 | 2.6 | 6.054 | 32.7 | 73.7 |
| Example 17 | 49.0 | 17.6 | 7.2 | 2.4 | 2.8 | 6.030 | 42.5 | 73.2 |
| Example 18 | 49.2 | 17.8 | 7.8 | 2.3 | 2.6 | 6.050 | 27.8 | 73.3 |
| Example 19 | 49.0 | 18.6 | 8.1 | 2.3 | 2.8 | 6.026 | 59.9 | 73.6 |
| Comparative Example 1 | 52.4 | 23.7 | 12.8 | 1.8 | 2.4 | 6.012 | 39.3 | 73.3 |
| Comparative Example 2 | 50.1 | 19.4 | 9.0 | 2.1 | 2.3 | 5.993 | 55.8 | 73.6 |
| Comparative Example 3 | 47.2 | 5.9 | 3.4 | 1.7 | 1.3 | 6.019 | 22.8 | 73.6 |
| Comparative Example 4 | 51.5 | 17.6 | 12.7 | 1.4 | 1.4 | 6.054 | - | - |
| In the table, "-" means "not measured". | | | | | | | | |

In all of the sintered bodies of Examples 1 to 19, $2.0 \leq$ a*/b* and $2.4 \leq R_{700}/R_{600}$ were satisfied, and thus, it was confirmed that the sintered bodies exhibit a bright red color under daylight.

Furthermore, the sintered bodies of Examples 1 to 19 had higher values of a*/b* and $R_{700}/R_{600}$ than those of Comparative Examples 1 and 2, which did not include $Al_2O_3$, and thus, it was confirmed that the sintered bodies exhibit a bright red color under daylight, with the exhibition of an orange color being inhibited. Furthermore, the sintered bodies of the Examples had higher values of a*/b* and $R_{700}/R_{600}$ than those of Comparative Example 3, which included $Al_2O_3$ but did not include any toning element, and thus, it was confirmed that the sintered bodies exhibit a bright red color under daylight, with the exhibition of an orange color being inhibited. The sintered body of Comparative Example 3 had an ionic radius ratio of niobium to Zr of less than 1, which resulted in lower values of a*/b* and $R_{700}/R_{600}$ than those of the sintered bodies of Examples 1 to 19. In Comparative Example 4, the toning element content was greater than 4 mol%, which resulted in low values of a*/b* and $R_{700}/R_{600}$, and, consequently, the resulting sintered body was not one that exhibits a bright red color.

INDUSTRIAL APPLICABILITY

The zirconia sintered body of the present invention has excellent aesthetics and can be used in various components, such as luxurious jewels free of flaws, and components such as decorative components, examples of which include parts of timepieces and exterior parts of portable electronic devices.

The entire contents of the specification, claims and abstract of Japanese Patent Application No. 2023-138864, filed on August 29, 2023, are cited and incorporated herein as a disclosure of the specification of the present disclosure.

**Claims**

1. A sintered body of zirconia, the sintered body containing cerium, aluminum, yttrium and a toning element, wherein

    a content of the cerium, calculated as $CeO_2$, is 1.5 mol% or greater and 6.0 mol% or less,
    a content of the aluminum, calculated as $Al_2O_3$, is 0.05 mol% or greater and 4.0 mol% or less,
    a content of the yttrium, calculated as $Y_2O_3$, is 2.0 mol% or greater and 6.0 mol% or less,
    a content of the toning additive element, calculated as an oxide, is greater than 0 mol% and 4.0 mol% or less,
    the cerium includes trivalent cerium ($Ce^{3+}$),
    the toning element is at least one of alkaline earth metal elements and rare earth elements other than yttrium or cerium, and
    a ratio of an ionic radius of the toning element to an ionic radius of tetravalent zirconium ($Zr^{4+}$) is greater than 1.00 and 1.60 or less.

2. The sintered body according to claim 1, wherein the zirconia has a crystal structure including a tetragonal phase and a cubic phase.

3. The sintered body according to claim 1 or 2, wherein the toning element is one or more selected from the group of calcium, magnesium, erbium, holmium, dysprosium, terbium, gadolinium, europium, samarium, neodymium, praseodymium and lanthanum.

4. The sintered body according to any one of claims 1 to 3, wherein the ratio of the ionic radius of the toning element is greater than 1.33 and 1.40 or less.

5. The sintered body according to any one of claims 1 to 4, wherein a ratio a*/b*, which is a ratio of a color parameter a* to a color parameter b* according to an L*a*b* color system, is greater than or equal to 2.0.

6. The sintered body according to any one of claims 1 to 5, wherein a ratio $R_{700}/R_{600}$, which is a ratio of $R_{700}$ to $R_{600}$, is greater than or equal to 2.4, where $R_{700}$ is a reflectance for light at a wavelength of 700 nm, and $R_{600}$ is a reflectance for light at a wavelength of 600 nm.

7. The sintered body according to any one of claims 1 to 6, wherein the sintered body has an XRD pattern in which a ratio of a height of a peak top at $2\theta = 37.0 \pm 0.3$ to a height of a peak top at $2\theta = 30.0 \pm 0.3$ is 0.005 or less.

8. A powder composite containing a cerium source, an aluminum source, an yttrium-containing-zirconia source and a toning element source, wherein

a content of cerium, calculated as $CeO_2$, is 1.5 mol% or greater and 6.0 mol% or less,
a content of aluminum, calculated as $Al_2O_3$, is 0.05 mol% or greater and 4.0 mol% or less,
a content of yttrium, calculated as $Y_2O_3$, is 2.0 mol% or greater and 6.0 mol% or less,
a content of a toning element, calculated as an oxide, is greater than 0 mol% and 4.0 mol% or less,
the toning element source is a compound containing at least one of alkaline earth metal elements and rare earth elements other than yttrium or cerium, and
a ratio of an ionic radius of the toning element to an ionic radius of tetravalent zirconium ($Zr^{4+}$) is greater than 1.0 and 1.6 or less.

9. A method for producing the sintered body according to any one of claims 1 to 7, the method comprising a molding step of molding the powder composite of zirconia according to claim 8 to form a green body; a step of subjecting the green body to pressureless sintering to form a primary sintered body; and a secondary sintering step of sintering the primary sintered body in a reducing atmosphere.

## INTERNATIONAL SEARCH REPORT

International application No.

**PCT/JP2024/027917**

### A. CLASSIFICATION OF SUBJECT MATTER

*C04B 35/488*(2006.01)i; *A44C 27/00*(2006.01)i; *C01G 25/02*(2006.01)i
FI: C04B35/488 500; C01G25/02; A44C27/00

According to International Patent Classification (IPC) or to both national classification and IPC

### B. FIELDS SEARCHED

Minimum documentation searched (classification system followed by classification symbols)

C04B35/488; A44C27/00; C01G25/02; A61K6/818

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

JSTPlus/JSTChina/JST7580 (JDreamIII)

### C. DOCUMENTS CONSIDERED TO BE RELEVANT

| Category* | Citation of document, with indication, where appropriate, of the relevant passages | Relevant to claim No. |
|---|---|---|
| Y | WO 2017/038937 A1 (TOSOH CORP.) 09 March 2017 (2017-03-09) claims, paragraphs [0232]-[0242], examples 26-32 | 1-3, 5-9 |
| A | | 4 |
| Y | JP 2017-132647 A (TOSOH CORP.) 03 August 2017 (2017-08-03) claims, paragraph [0019], table 1 | 1-3, 5-9 |
| A | | 4 |
| A | WO 2020/039924 A1 (TOSOH CORP.) 27 February 2020 (2020-02-27) entire text | 1-9 |
| A | JP 62-059571 A (TORAY INDUSTRIES, INC.) 16 March 1987 (1987-03-16) entire text | 1-9 |
| A | JP 2006-104024 A (KABUSHIKI KAISHA KOBE SEIKO SHO) 20 April 2006 (2006-04-20) entire text | 1-9 |

☑ Further documents are listed in the continuation of Box C.      ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **04 September 2024** | **17 September 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT

| International application No. |
|---|
| **PCT/JP2024/027917** |

| C. | DOCUMENTS CONSIDERED TO BE RELEVANT |
|---|---|

| Category* | Citation of document, with indication, where appropriate, of the relevant passages | Relevant to claim No. |
|---|---|---|
| A | LV, Haodong et al., Development mechanism of Ce-doped red zirconia ceramics prepared by a high-temperature reduction method, Journal of Alloys and Compounds, 2019, vol. 797, pp. 931-939, ISSN:0925-8388, DOI:10.1016/j.jallcom.2019.05.216<br>p. 932, "2.1 Materials and methods", p. 935, fig. 3, p. 937, "4. Conclusions" | 1-9 |

Form PCT/ISA/210 (second sheet) (July 2022)

**INTERNATIONAL SEARCH REPORT**
Information on patent family members

International application No.

**PCT/JP2024/027917**

| Patent document cited in search report | | | Publication date (day/month/year) | Patent family member(s) | | | Publication date (day/month/year) |
|---|---|---|---|---|---|---|---|
| WO | 2017/038937 | A1 | 09 March 2017 | US 2018/0222799 A1 claims, paragraphs [0280]-[0289], examples 26-32 EP 3345883 A1 CN 107922272 A | | | |
| JP | 2017-132647 | A | 03 August 2017 | (Family: none) | | | |
| WO | 2020/039924 | A1 | 27 February 2020 | US 2021/0403387 A1 entire text EP 3842402 A1 CN 112585103 A | | | |
| JP | 62-059571 | A | 16 March 1987 | (Family: none) | | | |
| JP | 2006-104024 | A | 20 April 2006 | (Family: none) | | | |

Form PCT/ISA/210 (patent family annex) (July 2022)

24

**EP 4 772 490 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 62083366 A
- JP 2011207745 A
- JP 2017132647 A
- JP 2017075086 A
- JP 2023138864 A

**Non-patent literature cited in the description**

- **SHANNON**. *Acta. Crystallogr*, 1976, vol. A32, 751-67

25